# EUROPÄISCHE PATENTSCHRIFT

(11) **EP 2 877 070 B1**
(45) Veröffentlichungstag und Bekanntmachung des Hinweises auf die Patenterteilung: **15.05.2019**
(21) Anmeldenummer: 13736562.3
(22) Anmeldetag: 11.07.2013
(51) Int. Cl.: A47J 43/25, A47J 43/10, A47J 43/08

(54) **SCHEIBENRAFFEL**
DISK GRATER
RAPE CIRCULAIRE

(30) Priorität: 12.07.2012 CH 10762012
(43) Veröffentlichungstag der Anmeldung: 03.06.2015
(73) Patentinhaber: Groupe SEB Schweiz GmbH, 8152 Glattpark (Opfikon) (CH)
(72) Erfinder: HERREN, Bruno, 6375 Beckenried (CH)
(74) Vertreter: Rentsch Partner AG
(86) Internationale Anmeldenummer: PCT/EP2013/064664
(87) Internationale Veröffentlichungsnummer: WO 2014/009460

(56) Entgegenhaltungen:
- WO-A1-2007/128154
- DE-A1- 10 057 835
- GB-A- 2 327 864

## Beschreibung

### TECHNISCHES GEBIET

Die Erfindung betrifft ein manuell betätigtes Gerät zum Formschneiden von Lebensmitteln.

### STAND DER TECHNIK

Aus dem Stand der Technik sind eine Vielzahl von Scheibenreiben oder Scheibenraffeln bekannt, die beispielsweise entweder als Einzelgeräte oder als Zusatzgeräte für Küchenmaschinen verkauft werden. Im Regelfall sind solche Scheibenraffeln heute elektrisch betrieben. Sie verfügen über einen Einfüllschacht für das zu zerkleinernde Gemüse, einen Stutzen mit dem das Gemüse in den Einfüllschacht gedrückt wird, der gleichzeitig auch als Schneidschutz dient und einen elektrischen Antrieb für die Schneidscheibe. Je nach gewünschtem Schneidergebnis können die Schneidscheiben entsprechend ausgetauscht werden. Als Beispiel für eine Vielzahl von elektrischen Scheibenraffeln sei an dieser Stelle die Elektroraffel OPTUS Z1, der Firma OPTUS erwähnt. Manuell betriebene Geräte die über einen Kurbelantrieb verfügen sind ebenfalls aus dem Stand der Technik bekannt. Nachteilig an den Kurbelantrieben ist, dass die Schneidscheibe häufig nur mit geringem Drehmoment angetrieben werden kann und verglichen mit einem Elektroantrieb nur wesentlich geringere Drehzahlen erzielt werden können. In Folge dessen, lassen sich bei hartem oder fasrigem Schneidgut nur mässige Ergebnisse erzielen. Das Schneidgut wird entweder von den Klingen der Schneidscheibe mitgenommen und nicht zerschnitten oder es kommt zum Blockieren der Schneidscheibe und zu einem Quetschen des Schneidgutes. Die Druckschrift DE-A-100 57 835 offenbart ein Gerät zum Bearbeiten von Lebensmitteln mit einem Oberteil, einem Antrieb, einer mittels dem Antrieb antreibbaren und in eine Drehbewegung versetzbaren Arbeitseinheit, wobei es sich beim Antrieb um einen manuell betätigbaren Schnurzugsantrieb handelt (siehe Paragraph 0064) und das Gerät am Oberteil ein Halte-Bedienelement aufweist, welches eine Schneidgutzufuhröffnung im Oberteil umfasst und welches dazu eingerichtet ist, das zu bearbeitende Lebensmittel der Arbeitseinheit zuzuführen und das Gerät in Position zu halten (siehe u.a. Paragraph 0059; Figur 6 a-c).

### DARSTELLUNG DER ERFINDUNG

Ausgehend von den bekannten elektrisch betriebenen Scheibenraffeln besteht die Aufgabe darin, ein Gerät zur Verfügung zu stellen, welches die vorgängig erwähnten Nachteile nicht aufweist.

Unter dem Begriff der Scheibenraffel ist im Folgenden auch eine Scheibenreibe zu verstehen.

Ein Problem welches sich bei der Entwicklung einer manuell betriebenen Scheibenraffel ergibt ist, dass das bei gleichzeitiger manueller Betätigung eines Schnurzugsantriebs mit einer Hand das Gerät mit der anderen Hand gehalten und das zu schneidende Lebensmittel ebenfalls mit dieser Hand zugeführt werden muss. Beim Raffeln ist das Gerät zwei Hauptkraftkomponenten ausgesetzt, einer Druckkraft mit der das Lebensmittel dem Gerät zugeführt und das Gerät gehalten wird sowie einer Zugkraft mit der der Anwender den Schnurzugsantrieb betätig. Um ein gutes Schneidergebnis zu erzielen ist es notwendig, sicherzustellen das genügend Druck- und Zugkraft auf das Gerät aufgebracht werden kann und ein Verrutschen und/ oder Kippen verhindert wird.

Das erfindungsgemässe Gerät weist die Merkmale gemäss Anspruch 1 auf. Das Gerät weist am Oberteil ein Halte-Bedienelement auf, welches eine Öffnung im Oberteil umfasst und welches dazu eingerichtet ist, das zu bearbeitende Lebensmittel der Arbeitseinheit zuzuführen und das Gerät in Position zu halten. In einer bevorzugten Ausführungsform wird die Öffnung von einem Schacht umlaufen, der dazu dient das Gerät stabiler mit einer Hand halten zu können und der gleichzeitig einen Einfüllstutzen für das zu schneidende Lebensmittel bildet. In einer vorteilhaften Ausführungsform der Erfindung ist der Schacht als separates Teil, aufsteckbar auf die Öffnung ausgeführt. Wenn das Gerät nicht verwendet wird kann der Schacht abgenommen werden und das Gerät auf diese Weise platzsparender verstaut werden. Der aufsteckbare Schacht dient weiters als Entriegelungselement für ein Sperrelement. Erst wenn der Schacht auf die Öffnung aufgesteckt wird kann der Benutzer das Gerät in Betrieb nehmen.

In einer weiteren Ausführungsform der Erfindung ist der Schacht in einem Umfangsbereich der Öffnung auf einer Oberseite des Oberteils angeformt.

In einer weiteren Ausführungsform des erfindungsgemässen Geräts, weist der Unterteil Stabilitätsmittel auf, die dazu eingerichtet sind eine Standfläche des Unterteils zu vergrössern.

Um zu Verhindern das der Benutzer den Schnurzugsantrieb bedienen und gleichzeitig mit der Hand in das Arbeitsmittel greifen kann, ist ein Sperrelement vorgesehen welches dazu eingerichtet ist, die Arbeitseinheit in einem Nicht-Betriebszustand zu blockieren. Um das Gerät in Gang zu setzen ist ein Entriegelungselement vorgesehen, welches dazu eingerichtet ist, das Sperrelement zu betätigen um die Blockierung zu lösen. Das Sperrelement greift beim Blockieren in ein Bremsmittel ein, wobei das Bremsmittel Teil der Arbeitseinheit ist. In einer Ausführungsform der Erfindung ist das Bremsmittel als Verzahnung ausgebildet, vorzugsweise eine Aussenverzahnung. Das Sperrelement greift in diese Verzahnung ein. Das Sperrelement ist, beispielsweise als beweglich gelagertes hakenförmiges Element ausgebildet. Zur Betätigung des Sperrelements ist das Halte-Bedienelement, im besonderen der Schacht, vorgesehen. In einer Ausführungsform der Erfindung dient der, auf die Öffnung aufsteckbare Schacht dazu das Sperrelement zu lösen und das Arbeitsmittel zu entsperren. Ist der Schacht nicht auf die Öffnung aufgesetzt rastet das Sperrelement in das Arbeitsmittel ein. Der Schacht ist so ausgebildet, dass er mit dem zu schneidenden Lebensmittel, beispielsweise einer Gurke befüllt werden kann.

Gemäss einer weiteren Ausführungsform weist das Gerät ein Antriebsrad mit einer Aussenverzahnung und eine Arbeitseinheit mit einer Innenverzahnung auf, wobei das Antriebsrad derart zur Arbeitseinheit angeordnet ist, dass die Aussenverzahnung des Antriebsrads in die Innenverzahnung der Arbeitseinheit eingreift und bei Betätigung des Schnurzugsantriebs die Arbeitseinheit in eine Drehbewegung versetzt. In einer bevorzugten Ausführungsform umfasst die Arbeitseinheit eine Schneid-, oder Raffelscheibe. Weiterhin weist die Schneidscheibe einen Tragring auf, der die Schneidscheibe peripher um läuft. In einer bevorzugten Ausführungsform hat der Tragring eine Innenverzahnung und ist in Bezug auf die Schneidscheibe symmetrisch angeordnet, wobei die Schneidscheibe die Symmetrieebene darstellt.

In bevorzugten Ausführungsformen der Erfindung, in der der Oberteil mit einem Behälter als Unterteil verbunden ist, weisen Oberteil und Behälter bevorzugt eine von der Kreisrundenform abweichende Geometrie, beispielsweise eine langgestreckte Form, wie die eines Ovals, einer Ellipse oder eines Rechtecks auf. Die langgestreckte Form erhöht die Standfestigkeit des Geräts. Die Geometrie erstreckt sich dabei vom Halte-Bedienelement aus gesehen in jene Richtung, in der durch Betätigung des Schnurzugsantriebs eine Zugkraft auf das Gerät ausgeübt wird. Die langgestreckte Form des Oberteils und des Behälters weist weiterhin den Vorteil auf, dass der Oberteil zum Behälter verdrehsicher ist.

Das erfindungsgemässe Gerät kann auf verschiedene Unterteile aufgesetzt werden oder mit verschiedenen Unterteilen lösbar verbunden sein. In einer bevorzugten Ausführungsform handelt es sich beim Unterteil um einen Auffangbehälter. Weitere Ausführungsformen, wie beispielsweise die eines Gestells auf das das erfindungsgemässe Gerät aufgesetzt ist, sind denkbar. Der Oberteil kann alternativ oder zusätzlich an seiner Unterseite oder peripher auch Formschlussmittel aufweisen mit deren Hilfe er sich auf einen Topf oder eine Schüssel passender Grösse aufsetzen lässt.

Das Halte-Bedienelement, in einer bevorzugten Ausführungsform ausgeführt als Schacht, weist weiterhin ein Führungsmittel auf. Das Führungsmittel ist derart ausgebildet ist, dass es passgenau in vertikaler Richtung zur einer Standfläche des Geräts, im Schacht geführt werden kann. Durch die passgenaue Führung wird erreicht, dass das Halte-Bedienelement mit einer ausreichenden Druckkraft beaufschlagt werden kann. Diese Druckkraft, die der Benutzer auf das Halte-Bedienelement ausübt, ist erforderlich, um zum einen das Lebensmittel der Arbeitseinheit zuzuführen und zum anderen das Gerät gegen die mittels des Schnurzugs eingeleiteter Zugkraft zu stabilisieren. Das Führungsmittel und der Schacht sind vorzugsweise in einer Form, abweichend von einer kreisrunden Form ausgestaltet, beispielsweise ellipsenförmig oder nierenförmig. In diesen bevorzugten Ausführungsformen kann das Führungsmittel nicht im Schacht verdreht werden.

In einer bevorzugten Ausführungsform des erfindungsgemässen Geräts ist eine Drehachse des Schnurzugsantriebs parallel beabstandet zu einer gedachten Symmetrieachse des Halte-Bedienelements und zu einer Zentralachse des Geräts angeordnet.

### KURZEERLÄUTERUNG ZU DEN FIGUREN

Die Erfindung soll nachfolgend anhand von Ausführungsbeispielen im Zusammenhang mit der Zeichnung näher erläutert werden. Es zeigen:
- Fig. 1: eine bevorzugte Ausführungsform des erfindungsgemässen Gerät in einer Schnittdarstellung,
- Fig. 4: eine bevorzugte Ausführungsform des Geräts mit einer erfindungsgemässen Sicherheitsvorrichtung mit einer bevorzugten Ausführungsform eines Entriegelungselements
- Fig.5: eine bevorzugte Ausführungen des Scheidgeräts mit einer weiteren erfindungsgemässen Sicherheitsvorrichtung mit einer weiteren bevorzugten Ausführungsform eines Entriegelungselements.

### WEGEZUR AUSFÜHRUNG DER ERFINDUNG

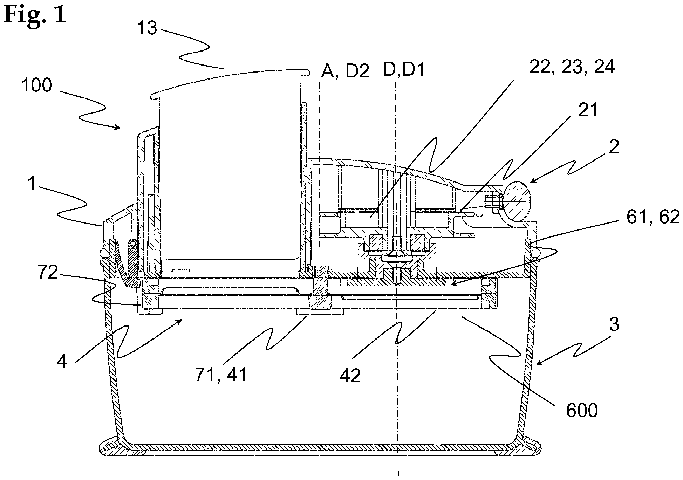

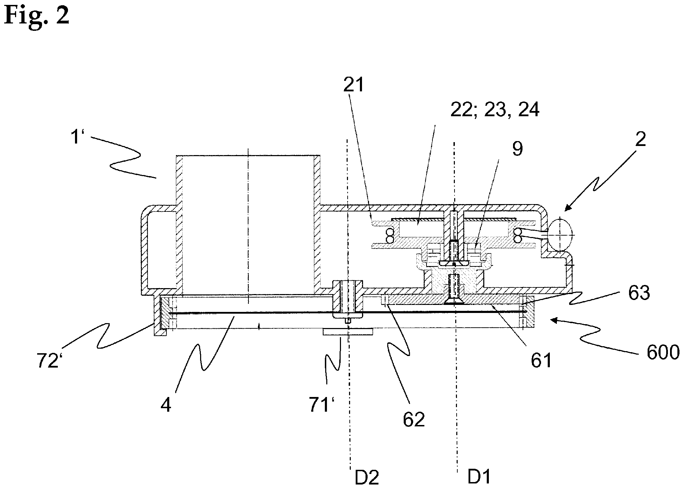

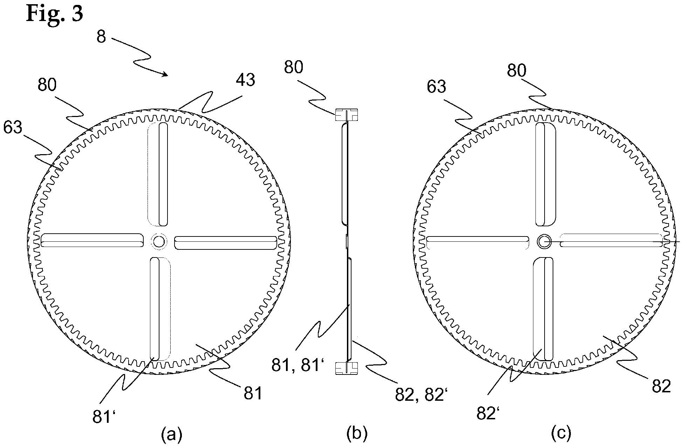

In Figur 1 ist eine erste bevorzugte Ausführungsform des erfindungsgemässen Geräts 100 dargestellt. Das Gerät umfasst einen Oberteil 1 der auf einen Unterteil 3 aufgesetzt ist. Das Gerät 100 verfügt weiters über eine Arbeitseinheit 4, welche bevorzugt eine Schneidscheibe darstellt, ein Halte-Bedienelement 13 mit einer gedachten Symmetrieachse und einen Antrieb 2. In einer bevorzugten Ausführungsform umfasst der Antrieb 2, einen Schnurzugsantrieb 21.

Bei der Zentralachse A handelt es sich um jene Achse die durch das Zentrum des erfindungsgemässen Geräts führt. Bei der Achse D handelt es sich um die Drehachse der Schnurzugsrolle 21. Unter den Begriffen Symmetrieachse, Zentralachse A und Drehachse D, ist eine geometrische Achse zu verstehen.

Die Drehachse D des Schnurzugsantriebs 21 verläuft parallel zur gedachten Symmetrieachse des Halte-Bedienelement 13 und zur Zentralachse A des Geräts 100. In der bevorzugten Ausführungsform des Geräts ist eine Austrittsstelle 23 einer Schnur, des Schnurzugsantriebs 21, seitlich am Oberteil 1 angeordnet. Die Anordnung ist so gestaltet, dass in Abhängigkeit einer geometrischen Form des Oberteils 1, der Abstand zwischen der Zentralachse A des Geräts und der Austrittsstelle 23 maximal ist.

Gemäss der Ausführungsform der Figur 1 wird das Antriebsrad 61 welches eine Aussenverzahnung 62 aufweist vom Antrieb 2, vorzugsweise dem Schnurzugsantrieb 21 betrieben. Wird das Antriebsrad 61 in Drehbewegung versetzt, greift die Aussenverzahnung 62 des Antriebsrads in eine Innenverzahnung 63 der Arbeitseinheit 4 ein und versetzt auf diese Weise die Arbeitseinheit 4 in eine Drehbewegung. In einer bevorzugen Ausführungsform der Erfindung durchdringt die Zentralachse A ein Lagerelement 41 der Arbeitseinheit 4.

Die Austrittsstelle 23 der Schnur 24 ist, gemessen an der geometrischen Form des Oberteils 1, derart angeordnet, dass der Abstand zwischen der Zentralachse A des Geräts und der Austrittsstelle 23 den grösstmöglichsten Wert annimmt. Vorzugsweise liegen die Austrittsstelle und dem gedachten Mittelpunkt des Halte-Bedienelements auf der Längsachse des Geräts.

Diese Art der Anordnung erhöht die Standfestigkeit des Geräts beim Betrieb des Schnurzugmechanismus.

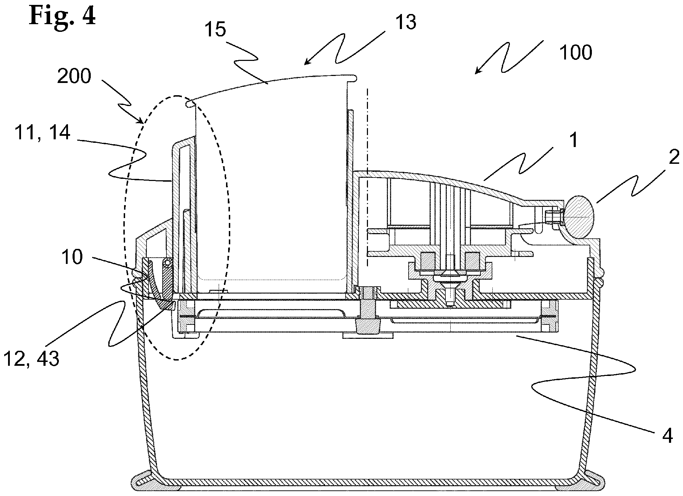

Figur 4 zeigt eine bevorzugte Ausführungsform einer erfindungsgemässen Sicherheitsvorrichtung 200. Die Sicherheitsvorrichtung umfasst ein Entriegelungselement 11 und Sperrelement 10. In der bevorzugten Ausführungsform gemäss der Figur 4 ist das Sperrelement 10 als beweglich gelagertes hakenförmiges Element ausgebildet und am Oberteil 1 des Geräts angeordnet. Bei dem in der Figur 4 dargestellten Zustand ist die Sicherheitsvorrichtung entriegelt. Das Halte-Bedienelements 13, im besonderen der Schacht 14 stellt das Entriegelungselement 11 dar. Das Halte-Bedienelements 13 umfasst den Schacht 14 und den Drücker 15. Der Schacht 14 ist als separater Teil ausgeführt.

Bei entferntem Entriegelungselement 11 greift das Sperrelement 10 in das Bremsmittel 12 der Arbeitseinheit 4 ein und blockiert diese. Beim Aufstecken des Schachtes 14 auf den Oberteil 1 des Geräts 100, entriegelt der Schacht 14 das Sperrelement 10 und die Arbeitseinheit 4 kann mit Hilfe des Antriebs 2 in eine Drehbewegung versetzt werden.

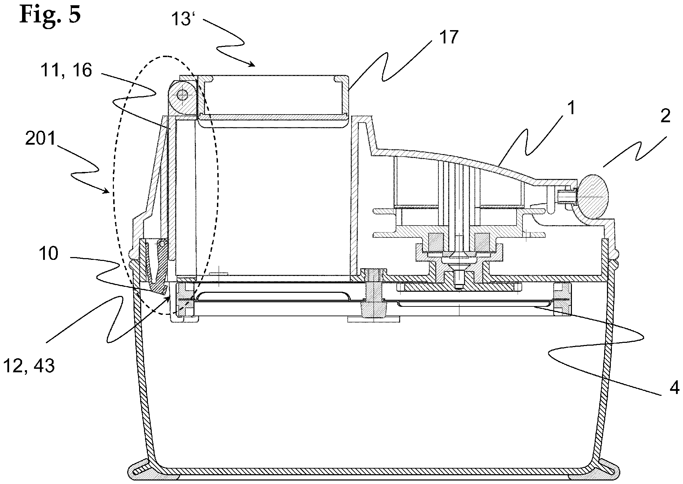

Figur 5 zeigt eine weitere bevorzugte Ausführungsform der Sicherheitsvorrichtung 201 in einem entriegelten Zustand. In dieser bevorzugten Ausführungsform umfasst das Halte-Bedienelement 13'einen Schieber 16 und ein Deckelelement 17.

In einer bevorzugten Ausführungsform der Erfindung entriegelt der Schieber 16 das Sperrelement 10 und die Arbeitseinheit 4 kann mit Hilfe des Antriebs 2 in eine Drehbewegung versetzt werden.

**LISTE DER BEZUGSZEICHEN**

| | |
|---|---|
| Gerät | 100 |
| Oberteil | 1, 1' |
| Halte-Bedienelement | 13, 13' |
| Antrieb | 2 |
| Schnurzugsantrieb | 21 |
| Austrittsstelle | 23 |
| Unterteil | 3 |
| Arbeitseinheit | 4 |
| Verzahnung | 43 |
| Zentralachse | A, A' |
| Drehachse der Schnurzugsrolle | D, D' |
| Antriebsrad | 61 |
| Aussenverzahnung | 62 |
| Innenverzahnung | 63 |
| Antriebswelle | 64 |
| Schneidscheibe | 8 |
| Sperrelement | 10 |
| Entriegelungselement | 11 |
| Bremsmittel | 12 |
| Schacht | 14 |
| Drücker | 15 |
| Schieber | 16 |
| Deckelelement | 17 |
| Sicherheitsvorrichtung | 200, 201 |
| Schnur | 24 |
| Griff | 25 |

## Patentansprüche

1. Gerät (100) zum Bearbeiten von Lebensmitteln mit einem Oberteil (1), einem Antrieb (2), einer mittels dem Antrieb (2) antreibbaren und in eine Drehbewegung versetzbaren Arbeitseinheit (4), wobei es sich beim Antrieb (2) um einen manuell betätigbaren Schnurzugsantrieb (21) handelt und das Gerät am Oberteil (1) ein Halte-Bedienelement (13) aufweist, welches eine Schneidgutzufuhröffnung im Oberteil (1) umfasst und welches dazu eingerichtet ist, das zu bearbeitende Lebensmittel der Arbeitseinheit (4) zuzuführen und das Gerät in Position zu halten, **gekennzeichnet durch** ein Sperrelement (10) welches dazu eingerichtet ist,
die Arbeitseinheit (4) in einem Nicht-Betriebszustand zu blockieren und ein Entriegelungselement (11), welches dazu eingerichtet ist, das Sperrelement (10) zu betätigen um die Blockierung zu lösen, wobei zur Betätigung des Sperrelements (10) das Halte-Bedienelement (13) vorgesehen ist.

2. Gerät nach Anspruch 1, **dadurch gekennzeichnet, dass** ein Schacht (14) als separater Teil auf die Öffnung aufsteckbar ist oder dass der Schacht (14) in einem Umfangsbereich der Öffnung angeformt ist.

3. Gerät nach Anspruch 2, **gekennzeichnet durch** ein Führungsmittel wobei das Führungsmittel derart ausgebildet ist, dass es passgenau im Schacht (14) führbar ist.

4. Gerät nach einem der vorangegangenen Ansprüche 1 bis 3 umfassend den Schnurzugsantrieb (21) mit einem Antriebsrad (61) wobei das Antriebsrad eine Aussenverzahnung (62) aufweist und die Arbeitseinheit (4) mit einer Innenverzahnung (63) versehen ist, wobei das Antriebsrad (61) derart zur Arbeitseinheit (4) angeordnet ist, dass die Aussenverzahnung (62) des Antriebsrads (61) in die Innenverzahnung (63) der Arbeitseinheit (4) eingreift und bei Betätigung des Schnurzugsantriebs (21) die Arbeitseinheit (4) in eine Drehbewegung versetzt.

5. Gerät nach einem der vorangegangenen Ansprüche, **dadurch gekennzeichnet, dass** die Arbeitseinheit (4) eine Schneidscheibe (8) umfasst.

6. Gerät nach Anspruch 5, **dadurch gekennzeichnet, dass** die Schneidscheibe (8) einen Tragring (80) aufweist der die Schneidscheibe (8) peripher umläuft, und der Tragringring (80), vorzugsweise eine Innenverzahnung (63) aufweist.

7. Gerät nach Anspruch 6 **dadurch gekennzeichnet, dass** der Tragring (80) in Bezug auf die Schneidscheibe (8) symmetrisch angeordnet ist, wobei die Schneidscheibe (8) die Symmetrieebene darstellt.

8. Gerät nach einem der vorangegangenen Ansprüche, **dadurch gekennzeichnet, dass** eine Drehachse (D) des Schnurzugsantriebs (21) parallel beabstandet zu einer gedachten Symmetrieachse des Halte-Bedienelements (13) und zu einer Zentralachse (A) des Geräts angeordnet ist.

9. Gerät nach Anspruch 1 **dadurch gekennzeichnet, dass** das Sperrelement (10) in ein Bremsmittel (12) eingreift, wobei das Bremsmittel (12) Teil der Arbeitseinheit (4) ist.

10. Gerät nach Anspruch 9, **dadurch gekennzeichnet, dass** das Bremsmittel (12) als eine Verzahnung (43) ausgebildet ist, vorzugsweise als eine Aussenverzahnung der Arbeitseinheit (4) und das Sperrelement (10) in diese Verzahnung (43) eingreift, wobei das Sperrelement (10) als beweglich gelagertes hakenförmiges Element ausgebildet ist.

11. Gerät nach Anspruch 3, **dadurch gekennzeichnet, dass** der Schacht (14) und/ oder das Führungsmittel dazu eingerichtet sind das Sperrelement (10) zu betätigen.

12. Gerät nach einem der vorangegangenen Ansprüche 1 bis 11, **dadurch gekennzeichnet, dass** das Gerät einen Unterteil (3) mit Stabilitätsmittel umfasst, die dazu eingerichtet sind eine Standfläche des Unterteils (3) zu vergrössern.

## Claims

1. Apparatus (100) for processing foodstuffs, having an upper part (1), a drive (2), a working unit (4) which is drivable by means of the drive (2) and is able to be set in rotational movement, wherein the drive (2) is a manually operatable cord-pull drive (21) and the apparatus on the upper part (1) has a holding-operating element (13) which comprises an infeed opening for cutting goods in the upper part (1) and which is equipped for infeeding the foodstuff to be processed to the working unit (4) and for holding the apparatus in position, **characterized by** the locking element (10) which is equipped for blocking the working unit (4) in a non-operational state and an unlocking element (11) which is equipped for actuating the locking element (10) in order to release the blocking, wherein the holding-operating element (13) is provided for actuating the locking element (10).

2. Apparatus according to Claim 1, **characterized in that** a duct (14) is able to be placed onto the opening as a separate part or **in that** the duct (14) is formed in a circumferential region of the opening.

3. Apparatus according to Claim 2, **characterized by** a guide means (15), wherein the guide means is configured in such a manner that it is guidable with an exact fit in the duct (14).

4. Apparatus according to one of preceding Claims 1 to 3, comprising the cord-pull drive (21) having a drive wheel (61), wherein the drive wheel has an external toothing (62) and the working unit (4) is provided with an internal toothing (63), wherein the drive wheel (61) is disposed in such a manner in relation to the working unit (4) that the external toothing (62) of the drive wheel (61) engages in the internal toothing (63) of the working unit (4) and upon actuation of the cord-pull drive (21) sets the working unit (4) in rotational movement.

5. Apparatus according to one of the preceding claims, **characterized in that** the working unit (4) comprises a cutting disk (8).

6. Apparatus according to Claim 5, **characterized in that** the cutting disk (8) has a support ring (80) which peripherally encircles the cutting disk (8), and the support ring (80) preferably has an internal toothing (63) .

7. Apparatus according to Claim 6, **characterized in that** the support ring (80) is symmetrically disposed in relation to the cutting disk (8), wherein the cutting disk (8) represents the plane of symmetry.

8. Apparatus according to one of the preceding claims, **characterized in that** a rotation axis (D) of the cord-pull drive (21) is disposed so as to be spaced in a parallel manner from an imaginary symmetry axis of the holding-operating element (13) and from a central axis (A) of the apparatus.

9. Apparatus according to Claim 1, **characterized in that** the locking element (10) engages in a braking means (12), wherein the braking means (12) is part of the working unit (4).

10. Apparatus according to Claim 9, **characterized in that** the braking means (12) is configured as a toothing (43), preferably as an external toothing of the working unit (4), and the locking element (10) engages in this toothing (43), wherein the locking element (10) is configured as a hook-shaped element which is movably mounted.

11. Apparatus according to Claim 3, **characterized in that** the duct (14) and/or the guide means are/is equipped for actuating the locking element (10).

12. Apparatus according to one of preceding claims 1 to 11, **characterized in that** the apparatus comprises a lower part (3) having stabilizing means which are equipped for enlarging a footprint of the lower part (3).

## Revendications

1. Appareil (100) pour traiter des aliments, comprenant une partie supérieure (1), un entraînement (2), une unité de travail (4) pouvant être entraînée au moyen de l'entraînement (2) et pouvant être animée d'un mouvement de rotation, l'entraînement (2) étant un entraînement par traction à cordon (21) à commande manuelle et l'appareil présentant au niveau de la partie supérieure (1) un élément de commande de maintien (13) qui comprend une ouverture d'acheminement de produit à trancher dans la partie supérieure (1) et qui est prévu pour acheminer l'aliment à traiter à l'unité de travail (4) et pour maintenir l'appareil en position, **caractérisé par** un élément de blocage (10) qui est prévu pour bloquer l'unité de travail (4) dans un état non fonctionnel et par un élément de déverrouillage (11) qui est prévu pour actionner l'élément de blocage (10) afin de desserrer le blocage, l'élément de commande de maintien (13) étant prévu pour actionner l'élément de blocage (10).

2. Appareil selon la revendication 1, **caractérisé en ce qu'**un puits (14) en tant que pièce séparée peut être enfiché sur l'ouverture ou **en ce que** le puits (14) est façonné dans une région périphérique de l'ouverture.

3. Appareil selon la revendication 2, **caractérisé par** un moyen de guidage, le moyen de guidage étant réalisé de manière à pouvoir être guidé exactement dans le puits (14).

4. Appareil selon l'une quelconque des revendications précédentes 1 à 3, comprenant l'entraînement par traction à cordon (21) avec une roue d'entraînement (61), la roue d'entraînement présentant une denture extérieure (62) et l'unité de travail (4) étant pourvue d'une denture intérieure (63), la roue d'entraînement (61) étant disposée par rapport à l'unité de travail (4) de telle sorte que la denture extérieure (62) de la roue d'entraînement (61) s'engage dans la denture intérieure (63) de l'unité de travail (4) et anime d'un mouvement de rotation l'unité de travail (4) lors de l'actionnement de l'entraînement par traction à cordon (21).

5. Appareil selon l'une quelconque des revendications précédentes, **caractérisé en ce que** l'unité de travail (4) comprend un disque de coupe (8).

6. Appareil selon la revendication 5, **caractérisé en ce que** le disque de coupe (8) présente une couronne de support (80) qui tourne sur la périphérie du disque de coupe (8), et la couronne de support (80) présente de préférence une denture intérieure (63).

7. Appareil selon la revendication 6, **caractérisé en ce que** la couronne de support (80) est disposée symétriquement par rapport au disque de coupe (8), le disque de coupe (8) constituant le plan de symétrie.

8. Appareil selon l'une quelconque des revendications précédentes, **caractérisé en ce qu'**un axe de rotation (D) de l'entraînement par traction à cordon (21) est disposé parallèlement et à distance d'un axe de symétrie imaginaire de l'élément de commande de maintien (13) et d'un axe central (A) de l'appareil.

9. Appareil selon la revendication 1, **caractérisé en ce que** l'élément de blocage (10) s'engage dans un moyen de freinage (12), le moyen de freinage (12) faisant partie de l'unité de travail (4).

10. Appareil selon la revendication 9, **caractérisé en ce que** le moyen de freinage (12) est réalisé sous forme de denture (43), de préférence sous forme de denture extérieure de l'unité de travail (4) et l'élément de blocage (10) s'engage dans cette denture (43), l'élément de blocage (10) étant réalisé sous forme d'élément en forme de crochet supporté de manière déplaçable.

11. Appareil selon la revendication 3, **caractérisé en ce que** le puits (14) et/ou le moyen de guidage sont prévus de manière à actionner l'élément de blocage (10).

12. Appareil selon l'une quelconque des revendications précédentes 1 à 11, **caractérisé en ce que** l'appareil comprend une partie inférieure (3) avec des moyens de stabilisation qui sont prévus pour augmenter une surface d'appui de la partie inférieure (3).
